# EUROPEAN PATENT SPECIFICATION

(11) **EP 3 238 011 B1**
(45) Date of publication and mention of the grant of the patent: **03.07.2019**
(21) Application number: 15817284.1
(22) Date of filing: 18.12.2015
(51) Int. Cl.: G06F 3/01

(54) **SYSTEM AND METHOD FOR AUTOMATICALLY LOCALIZING HAPTIC EFFECTS ON A BODY**
VORRICHTUNG UND VERFAHREN ZUM AUTOMATISCHEN HAPTISCHE EFFEKTE AUF EINEM KÖRPER LOKALISIEREN
SYSTÈME ET PROCÉDÉ POUR LOCALISER AUTOMATIQUEMENT DES EFFETS HAPTIQUES SUR UN CORPS

(30) Priority: 23.12.2014 EP 14307156
(43) Date of publication of application: 01.11.2017
(73) Proprietor: InterDigital CE Patent Holdings, 75017 Paris (FR)
(72) Inventor: DANIEAU, Fabien, 35576 Cesson-Sevigne (FR); FLEUREAU, Julien, 35576 Cesson-Sevigne (FR); LE, Khanh-Duy, 35576 Cesson-Sevigne (FR)
(74) Representative: Huchet, Anne
(86) International application number: PCT/EP2015/080625
(87) International publication number: WO 2016/102391

(56) References cited:
- US-A1- 2010 302 015
- US-A1- 2014 270 681
- US-A1- 2014 300 454
- YEONGMI KIM ET AL: "A tactile glove design and authoring system for immersive multimedia", IEEE MULTIMEDIA, IEEE SERVICE CENTER, NEW YORK, NY, US, vol. 17, no. 3, 1 July 2010 (2010-07-01), pages 34-45, XP011342517, ISSN: 1070-986X, DOI: 10.1109/MMUL.2010.5692181
- MD ABDUR RAHMAN ET AL: "Adding haptic feature to YouTube", PROCEEDINGS OF THE INTERNATIONAL CONFERENCE ON MULTIMEDIA, MM '10, 25 October 2010 (2010-10-25), pages 1643-1646, XP055193061, New York, New York, USA DOI: 10.1145/1873951.1874310 ISBN: 978-1-60-558933-6

## Description

### FIELD OF THE INVENTION

The present principles relate to a system and a method for controlling haptic effects, and more particularly, to a system and a method for automatically localizing haptic effects on a body.

### BACKGROUND

In order to improve a user's immersion into a viewing experience, multimedia content that stimulates senses other than sight and sound are becoming more popular. The sense of touch (haptics) seems to be particularly relevant for this purpose, and more and more research is focused on the integration of haptic technologies into audiovisual systems. From this research effort, a new scientific field has emerged - haptic audiovisual (HAV). The three typical methods to create haptic effects include capturing, extraction and manual authoring. Capturing consists of attaching a sensor to an object to collect data. Usually an accelerometer is used to record movements. Then the data can be used to drive a haptic device. In a similar way, force sensors can be used to capture impact forces between two objects. The extraction methods include computing haptic effects from audiovisual content. The most used technique is to convert audio signals into vibrations. Haptic effects can also be extracted from images using, for example, saliency maps to detect objects of interest. The map is then mapped to a matrix of vibrating motors. Haptic effects may also be manually edited using a graphical interface with the haptic effects represented on a timeline with a start point and an end point. Between these two points, characteristics of the effect are specified (intensity of the vibration, direction of the acceleration, etc.). These techniques allow automatic generation of haptic effects but require tedious, manual methods to specify location of the effects in space.

US 2014/300454 A1 discloses a system that controls an offline haptic conversion. The system receives an input from a source. The system further converts the input into haptic signals. The system further encodes the haptic signals. The system further stores the haptic signals within the source, where the haptic signals are combined with the input within the source. Alternately, rather than encoding the haptic signals and storing the haptic signals within the source, the system handles the haptic signals separately, independent of the source.

US 2014/270681 A1 discloses a method for encoding haptic information inside a multi-media file having content, including changing a portion of the content in the multi-media file, and adding the haptic information to the changed portion of the content, the haptic information corresponding to a haptic signal for generating a haptic effect upon playback of the multi-media file. A method for decoding haptic information from inside a multi-media file having content includes locating the haptic information inside the multi-media file, and generating a haptic signal based on the located haptic information during playback of the content of the multi-media file. A method includes receiving a multi-media signal comprising an audio signal and a haptic signal with a receiver of a haptic device, and outputting a haptic effect with a haptic output device of the haptic device based on the haptic signal in the multi-media signal.

US 2010/302015 A1 discloses a system to present the user a 3-D virtual environment as well as non-visual sensory feedback for interactions that user makes with virtual objects in that environment. In an exemplary embodiment, a system comprising a depth camera that captures user position and movement, a three-dimensional (3-D) display device that presents the user a virtual environment in 3-D and a haptic feedback device provides haptic feedback to the user as he interacts with a virtual object in the virtual environment. As the user moves through his physical space, he is captured by the depth camera. Data from that depth camera is parsed to correlate a user position with a position in the virtual environment. Where the user position or movement causes the user to touch the virtual object, that is determined, and corresponding haptic feedback is provided to the user.

### SUMMARY

A technique to automatically localize haptic effects on a user's body relies on multimedia content and/or associated metadata to determine the user's body parts which could be stimulated by haptic effects. The multimedia content is analyzed by an effect localizer. A representation of the user's body is also provided (e.g., a body model). The technique determines the body parts of the user which should be stimulated using an intensity threshold for a haptic event and the time when the effect should occur. Thus, the method provides a quick and efficient manner to automatically determine which parts of the body to stimulate during a multimedia content viewing experience. The method allows real-time processing of the content for effect localization rather than requiring pre-processing for manual editing.

The present principles relates to a method for determining haptic localization, comprising receiving at least one haptic effect to be associated with at least one haptic event occurring in multimedia content; the haptic event derived from an audio event from the multimedia content automatically correlating the at least one haptic effect to at least one portion of a body based on multimedia content information; and transforming the at least one correlated haptic effect into a stimulating signal on a human body part.

According to an embodiment, the method further comprises utilizing at least one channel of an audio portion of the multimedia content to facilitate in localizing the haptic effect on the body.

According to an embodiment, the method further comprises utilizing an acoustic map of an audio portion of the multimedia content to facilitate in localizing the haptic effect on the body.

According to an embodiment, the method further comprises utilizing a time difference of arrival from an audio source point to points on a body model to determine which portions of a body to apply the haptic effect.

According to an embodiment, the method further comprises utilizing a time difference of arrival from an audio source point to points on a body model to determine to what degree of intensity to apply the haptic effect.

According to an embodiment, the method further comprises utilizing a body model to facilitate in localizing the haptic effect on the body.

The present principles also relates to a device configured for determining haptic localization, comprising means for receiving at least one haptic effect to be associated with at least one haptic event occurring in multimedia content; means for automatically correlating the at least one haptic effect to at least one portion of a body based on multimedia content information; and means for transforming the at least one correlated haptic effect into a stimulating effect on a body part.

The present principles also relates to a system for determining haptic localization, comprising a haptic effect generator that analyzes multimedia content to determine at least one haptic event and generates at least one haptic effect based on the haptic event; and a localizer that automatically correlates the at least one haptic effect to at least one portion of a body based on multimedia content information, wherein an output of the localizer is transformed into a stimulating effect on a body part.

According to an embodiment, the localizer or means for automatically correlating employs a body model to facilitate in localizing the at least one haptic effect.

According to an embodiment, the localizer or the means for automatically correlating provides at least one haptic effect locale and at least one haptic effect intensity.

According to an embodiment, the localizer or means for automatically correlating uses an acoustic map of an audio portion of the multimedia content to facilitate in localizing the haptic effect on the body.

According to an embodiment, the localizer or means for automatically correlating uses a time difference of arrival from an audio source point to points on a body model to determine which portions of a body to apply the haptic effect.

The present principles also relates to a computer program product, comprising instructions of program code for executing steps of the method for determining haptic localization, when said program is executed on a computer.

The present principles also relates to a processor readable medium having stored therein instructions for causing a processor to perform at least the steps of the method for determining haptic localization.

The present principles also relates to a user interface for localizing haptics, comprising a three dimensional body model that automatically indicates localization of at least one haptic effect on at least one portion of a body for at least one haptic event from multimedia content information; and a haptic effect duration indicator that shows a duration of the at least one haptic effect indicated on the three dimensional body model.

According to an embodiment, the user interface further comprises a selector that allows selection of different haptic effects for a given portion of the three dimensional body model.

According to an embodiment, the user interface comprises a selector that allows selection of different haptic events from the multimedia content and its associated haptic effect on the three dimensional body model.

According to an embodiment, the haptic effect duration indicator allows a start and stop time associated with a haptic effect to be altered.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

### BRIEF DESCRIPTION OF THE DRAWINGS

FIG. 1 depicts an example of automatically localizing haptic effects on a user's body in accordance with an embodiment of the present principles.
FIG. 2 depicts an example of an audio track of a video file for localizing haptic effects on a user's body in accordance with an embodiment of the present principles.
FIG. 3 depicts an exemplary body model in accordance with an embodiment of the present principles.
FIG. 4 depicts an exemplary user interface that can be utilized to allow editing of the haptic effect in accordance with an embodiment of the present principles.
FIG. 5 depicts another exemplary user interface in accordance with an embodiment of the present principles.
FIG. 6 depicts yet another example of a user interface in accordance with an embodiment of the present principles.
FIG. 7 depicts an exemplary virtual audio source that can be analyzed in relation to an audio track channel in accordance with an embodiment of the present principles.
FIG. 8 depicts an exemplary system that employs automatic haptic effect localization in accordance with an embodiment of the present principles.
FIG. 9 depicts, in flow chart form the steps of an exemplary method of automatically localizing haptic effects on a body in accordance with an embodiment of the present principles.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

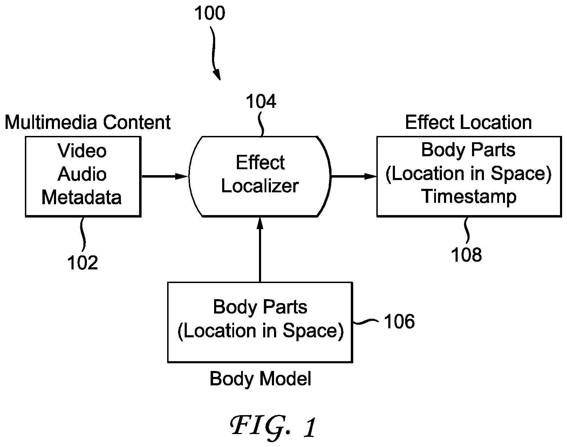

As illustrated in the example 100 of FIG. 1, a technique to automatically localize haptic effects on a user's body relies on multimedia content and/or its associated metadata 102 to determine a user's body parts which could be stimulated by haptic effects. The multimedia content/audiovisual content is received, and its content is analyzed by an effect localizer 104. A representation of the user's body is also utilized (e.g., body model) 106. The technique determines an effect location 108 (e.g., the body parts of the user which should be stimulated by a given effect typically using the body model 106). The technique also gives the time when the effect is to occur, allowing the effect to be synchronized with the content. Two examples with increasing complexity are used to illustrate the technique. One skilled in the art will understand that these embodiments are not meant to limit how the techniques are utilized. The first example is simplified in order to illustrate how each part of the technique can be implemented. The second example shows that advanced signal processing methods can be used to obtain a more precise result.

### Example 1

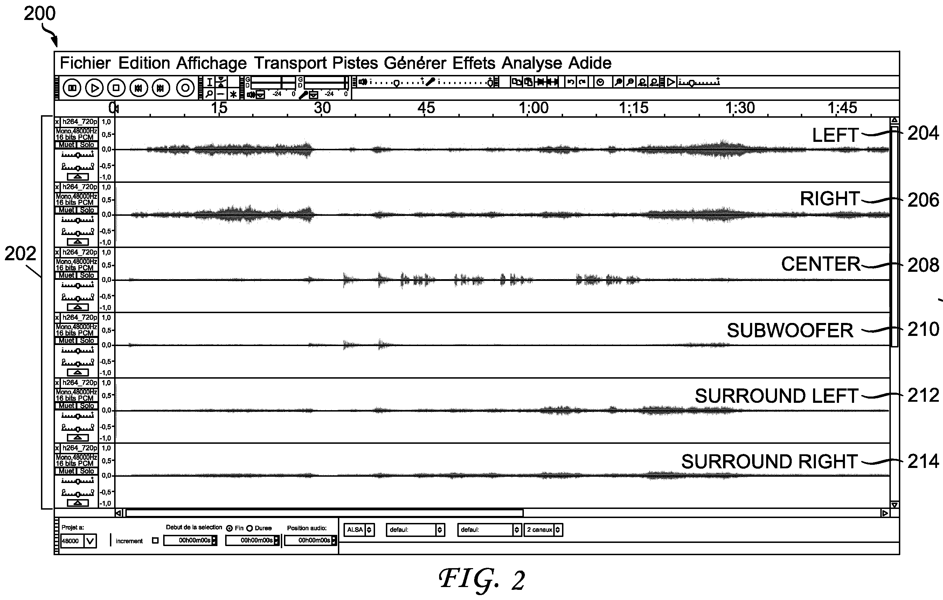

Audio information from a video file is utilized in this simplified example to determine the location of haptic effects. An example 200 in FIG. 2 depicts an audio track 202 from a video file. The format shown is Dolby Digital AC-3. Six channels are used to yield a 5.1 audio soundtrack. The order of channels is standardized and corresponds to left 204, right 206, center 208, subwoofer 210, back left 212 and back right 214. One skilled in the art will understand that any other audio format with single or multiple channels can be used in a similar way. The localization of the sound is used in localizing the haptic effects. For example, if a sound is detected on the left channel 204, it can be used to provide a haptic effect on the left side of a user's body and the like.

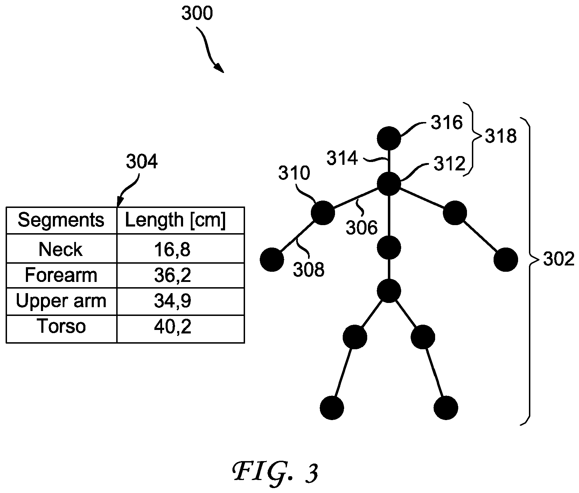

Body Model - An example 300 of a body model 302 is shown in FIG. 3 with model representing the user's body with joints and segments . The body model segment lengths are defined in a table 304. In the body model 302, for example, arms are considered as two segments (arm 306 and forearm 308) and two joints (elbow 310 and shoulder 312). The neck 318 is composed of one segment 314 and one joint 316. The size of segments are defined by anatomical data (see table 304). Here only the upper part of the user's body is defined, but the rest of the body can be also formalized.

Effect Localizer - An example in pseudo code of an effect localizer is given below in TABLE 1. Basically, each audio channel is mapped to one or several parts of a user's body. Then, the audio signal is processed to determine if there are effects to be applied on a selected user's body part(s). The intensity of the audio signal is analyzed. If it is greater than a given threshold, a haptic effect is added on the targeted body part(s).

**TABLE 1: Effect Localizer Pseudo Code**

| |
|---|
| ```
THRESHOLD = 30 decibels
open video_file
extract audio_tracks
for each track in audio tracks:
 switch(channel of track):
 case LEFT:
 BODY_PART = LEFT_ARM_FRONT
 case RIGHT:
 BODY_PART = RIGHT_ARM_FRONT
 case CENTER:
 BODY_PART = TORSO_FRONT
 case SUBWOOFER:
 BODY_PART = ALL
 case SURROUND LEFT :
 BODY_PART = LEFT_ARM_BACK
 case SURROUND RIGHT:
 BODY_PART = RIGHT_ARM_BACK
 for each sample in track:
 if intensity of sample > THRESHOLD:
 add haptic effect on BODY_PART at timestamp of sample
``` |

Of course more complicated signal processing can be applied to determine if an effect should be applied or not. Particular sound effects can be identified such as an explosion or gunshot. Haptic effects can then be associated to these events automatically.

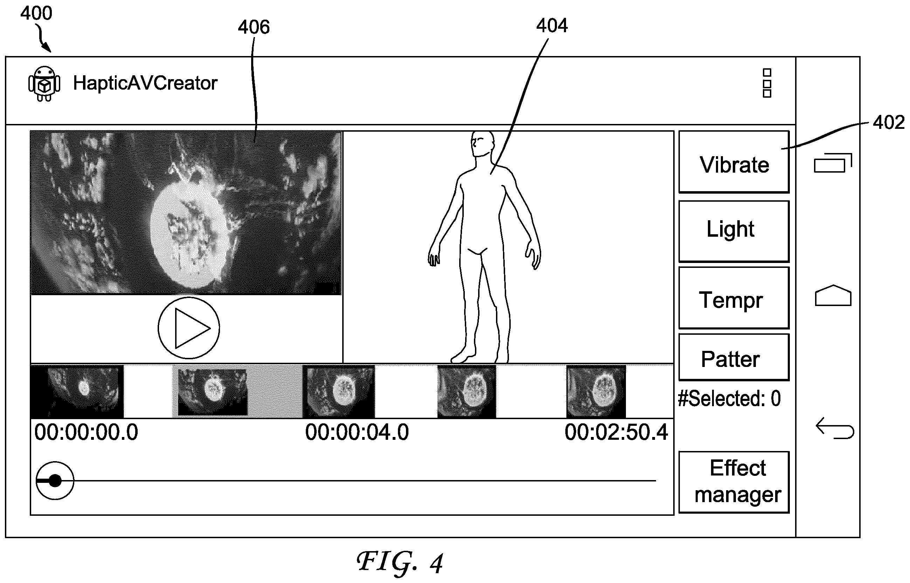

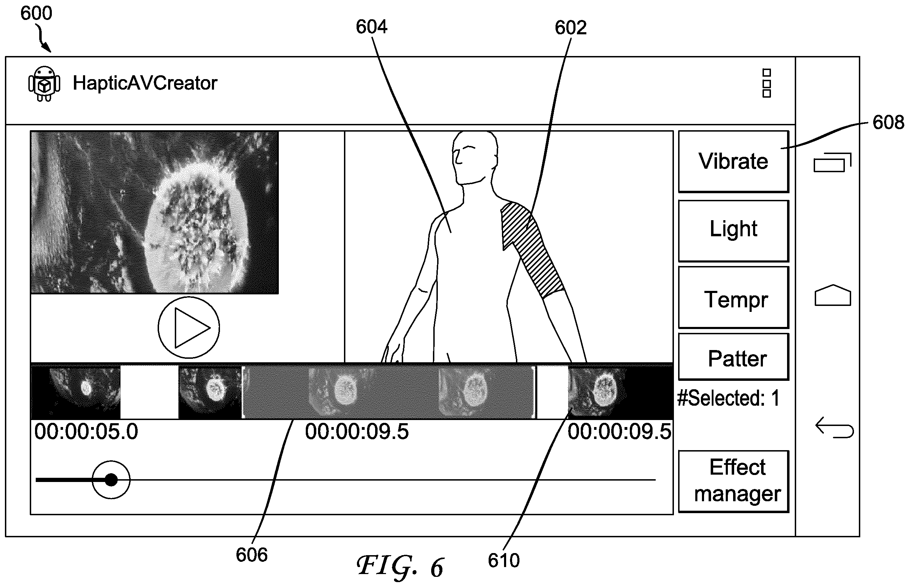

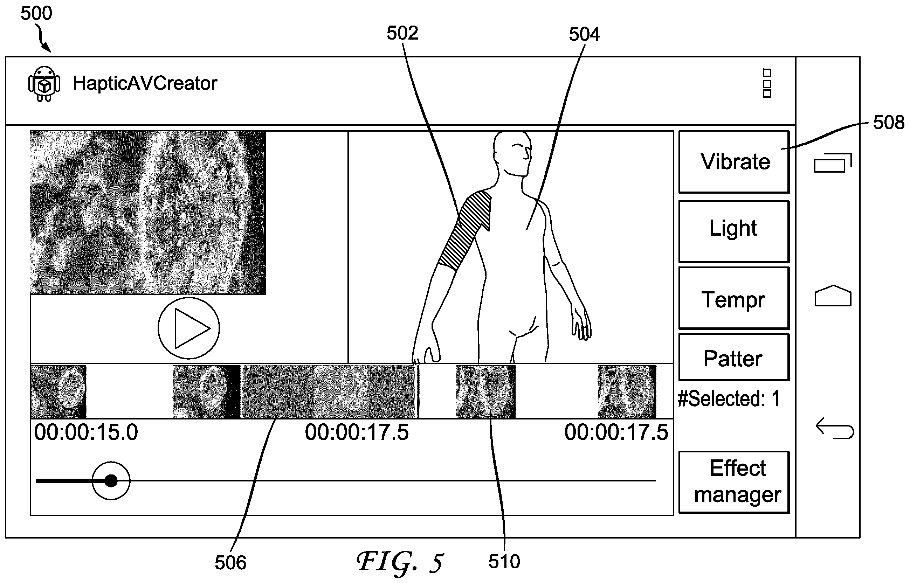

In order to facilitate localizing the effects, a user interface comprising an editor 400 can be utilized to allow editing of the haptic effect (e.g., vibration 402) and to locate them on a user's body as illustrated in FIG. 4. A three dimensional (3D) body model 404 is displayed to show where haptic effects can be located. The edited effects are synchronized to multimedia content 406. The editor 400 can be an application that runs on any type of operating system and/or operates in a standalone manner. The multimedia content 406 can be played using, for example, a media player and the like via an application programming interface (API) and the like. An API provides information regarding, for example, an audio track of the multimedia content which can be used to implement the effect localizer discussed above. In user interface illustrations of FIGs. 5 and 6, editor examples 500 and 600 show how results of an effect localizer can be used. In FIG. 5, a right arm 502 of a user 504 has been selected and for a specific duration 506. In FIG. 6, a left arm 602 of the user 604 is selected for another moment of the video. The haptic effect can then be transformed into a stimulation effect applied to that body part. Additionally, once a body part and video frame(s) is/are selected, a haptic effect can also be edited manually before being transformed into a stimulation effect.

### Example 2

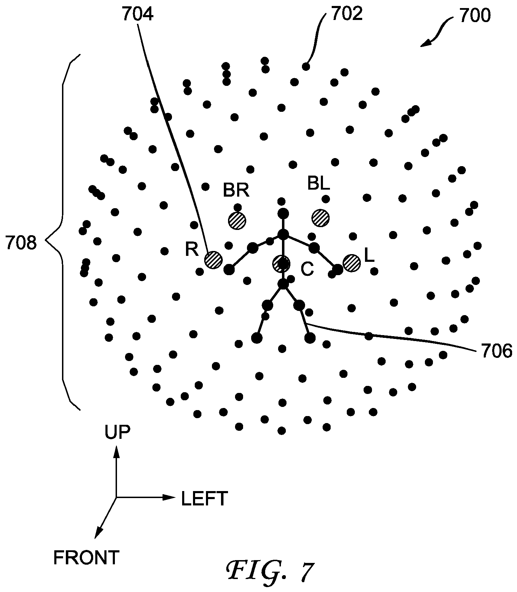

In a second embodiment that still utilizes the six Dolby Digital AC-3 audio tracks as an input for haptic effect localization, one can try to more precisely localize the sound sources using advanced signal processing techniques and then infer which part of the body model should be stimulated. In the example 700 of FIG. 7, a possible virtual audio source 702 can be analyzed in relation to an audio track channel 704 from multimedia content. More precisely, each channel of the audio track (putting aside the subwoofer) can be considered as an observation at a specific part of the user (respectively Left, Right, Center, Back Left and Back Right) of one dominant peripheral audio activity modeled as a virtual audio source 702 uniformly mapped on a sphere 708 around a user 706. Dedicated signal processing techniques, such as, for example, exploiting the time difference of arrival of the audio signals can then be used to solve this inverse problem of acoustic source localization by determining which source (direction) is more likely at a given time of the soundtrack. Once the source location is identified, the body part to be stimulated can be chosen as the closest one from this source.

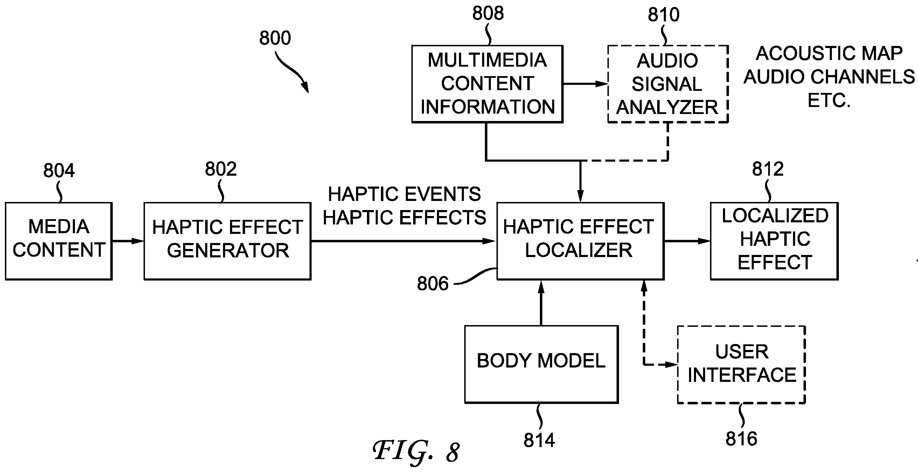

The above two examples are not inclusive of all embodiments that can utilize the described techniques. FIG. 8 depicts an exemplary system 800 that employs the above-described techniques for automatic haptic effect localization in accordance with an aspect of the present principles. In a typical scenario, the system 800 can use a haptic effect generator 802 to process multimedia content 804. The haptic effect generator 802 analyzes the multimedia content 804 to determine 'haptic events' or events that occur in the multimedia content 804 that could be enhanced with some type of sensory stimulation. A haptic event could be an explosion, a rocket launch or a rumbling of a tank, etc. The haptic event represents a point in the multimedia content 804 that a user should be stimulated through senses other than through sight and sound. This point can also include an event duration and/or a start/stop point in the multimedia content 804 (e.g., which frames to include). This information allows for haptic effects to be synchronized with the haptic event. Thus, a user would see, hear and feel the rumbling of a tank or the explosion of a rocket launch and the like.

The haptic effect localizer 806 receives the haptic event and associated haptic effect from the haptic effect generator 802. The haptic effect localizer 806 automatically determines which part of a user's body should be stimulated by the haptic effect. Stimulation (corresponding to a haptic effect) is localized to a body part when the intensity of the haptic event is found to surpass a predetermined threshold for that particular body part. This is accomplished by utilizing multimedia content information 808 and, optionally, audio signal analyzer 810. The multimedia content information 808 can include, but is not limited to, the multimedia content and/or metadata associated with the multimedia content. The multimedia content information can originate from different types of media such as sound tracks, movies, game play/environments and/or music and the like. This information facilitates in putting the haptic effect into context. As illustrated in examples 1 and 2 above, this can include audio signal analysis provided by the audio signal analyzer 810. Thus, audio channel information and/or acoustic maps and the like can be derived from the multimedia content information 808 to aid in determining a localized haptic effect 812. One skilled in the art can appreciate that other techniques can be employed to help in determining a source of an event and the like in context of the multimedia content. In one embodiment, the haptic effect localizer 806 uses a body model 814 to map or correlate the haptic effect to a user's body. The body model 814 can be, but is not limited to, a joint and segment representation of the user's body. This type of model allows the haptic effect localizer 806 to use the dimensions of the user's arms, legs, torso and head/neck to project how the haptic effect should be applied to the user.

The haptic effect can then be transformed into a stimulation effect that is automatically applied to a user at various portions of their body and also in varying degrees of intensity. For example, an explosion (haptic event) might occur off to the right in the multimedia content. The explosion might also be high above the ground. Thus, using the body model of a person standing during the explosion, it can be automatically determined from the multimedia content that the impact of the explosion would most likely be to the head and upper right portion of the body. Therefore the intensity of a stimulation effect corresponding to the haptic effect can be applied at a higher level to the head and upper right portion of the body and at a lower intensity to the lower right portion of the body. The effect localization can therefore have both a locale and an intensity associated with it.

The system 800 can also employ a user interface 816 to allow control over the outcome of the automated process. Examples of one embodiment can be found in FIGs. 4-6. The user interface 816 can include a three dimensional body model that automatically indicates localization of at least one haptic effect on at least one portion of a body for at least one haptic event from the multimedia content information 808. The user interface 816 can also include a haptic effect duration indicator showing the duration of at least one haptic effect indicated on the three dimensional body model (see FIG. 5, duration 506 and FIG. 6, duration 606). A selector can also be included that allows different haptic effects for a given portion of the three dimensional body model to be selected (see FIG. 5, 508; FIG. 6, 608). A haptic effect duration indicator can also allow a start and/or stop time associated with the haptic effect to be altered (the duration indicator can also be based on a start frame and a stop frame and/or a start frame that includes the next Y frames, etc.). This can be accomplished in one embodiment by dragging the stop and/or start points. Another selector can also be included that allows different haptic events from the multimedia content 808 and its associated haptic effect on the three dimensional body model to be selected (see FIG. 5, 510; FIG. 6, 610).

The user interface allows the resulting automated process to be viewed and/or altered as desired. This can provide additional quality control checks on the process and/or allow the process to be changed for haptic events processed in the future. For example, gunshot haptic intensity levels could be increased overall so that the sensory impact is much more significant for future haptic events that include gunshots. This adjustment might be necessary when a poor quality audio track is used and the like. Adjustments could also be made to the affected portions of the body for a given haptic effect and/or additional haptic effects could be added to portions of the body. The three dimensional body model allows an editor to rotate the body model to see all affected portions of the body (i.e., where the effect localization occurs).

Other controls can include an adjustment for an intensity threshold (used for determining when haptic effect localization occurs) which can be adjusted for the entire body model and/or individual body parts. This allows the user of the interface to determine at what intensity threshold a body part will have an effect automatically localized (in other words, how sensitive the body model is to a particular haptic event and/or how sensitive each body part is to a particular haptic event). As found in real life, different parts of the body sense or react differently to the same stimulus. Thus, this adjustment allows for those differences. As an example, an explosion occurring in the multimedia content might include a heat component with the haptic effect. Since heat is typically felt more on the face if a user is clothed, a haptic effect that included a heat component can trigger a lower intensity threshold for the upper body part of the body model. This could cause an automatic localization of the heat related haptic effect to be localized on the upper body parts but not necessarily localized on the lower body parts.

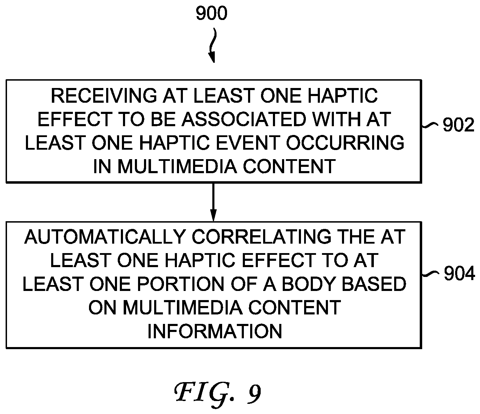

In view of the exemplary systems shown and described above, methodologies that can be implemented in accordance with the embodiments will be better appreciated with reference to the flow chart of FIG. 9. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and*/*or* concurrently with other blocks from that shown and described herein. Moreover, not all illustrated blocks may be required to implement the methodologies in accordance with the embodiments.

FIG. 9 is a flow diagram of a method 900 of automatically localizing haptic effects on a body. The method 900 begins by receiving at least one haptic effect to be associated with at least one haptic event occurring in multimedia content 902. The at least one haptic effect is then automatically correlated to at least one portion of a body based on multimedia content information 904. The multimedia content information can include, but is not limited to, multimedia content and/or metadata associated with the multimedia content. The techniques which can used to automatically determine the haptic effect localization have been fully described above. These techniques include, but are not limited to, using a body model to allow a spatial determination of how the haptic event affects the body and, thus, where to automatically apply the haptic effect. For example, at least one channel of an audio portion of the multimedia content can be used to facilitate in localizing the haptic effect on the body. In another example, an acoustic map of an audio portion of the multimedia content is used to facilitate in localizing the haptic effect on the body. Additionally, a time difference of arrival from an audio source point from the acoustic map to points on a body model can be used to determine on which portions of a body to apply the haptic effect. Also, a time difference of arrival from an audio source point to points on a body model can be used to determine to what degree of intensity to apply a stimulation effect that corresponds to the haptic effect.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this specification.

## Claims

1. A method for determining haptic localization on a human body, comprising:
- receiving at least one haptic effect to be associated with at least one haptic event occurring in multimedia content, the haptic event derived from an audio event from the multimedia content;
- determining at least one portion of the human body on which to apply the at least one haptic effect by using a time difference of arrival of the sound of said audio event from an audio source point to points on a human body model representing the human body; and
- stimulating said at least one portion of the human body according to said at least one haptic effect.

2. The method of claim 1, further comprising:
- using at least one channel of an audio portion of the multimedia content to aid in identifying a location where to apply the haptic effect on the human body.

3. The method of claim 1, wherein a degree of intensity to apply the haptic effect is determined by using a time difference of arrival of the sound of said audio event from said audio source point to points on the human body model.

4. A system for determining haptic localization on a human body, comprising:
- a haptic effect generator that analyzes multimedia content to determine at least one haptic event and generates at least one haptic effect based on the haptic event, wherein the haptic event is derived from an audio event from the multimedia content; and
- a localizer that determines at least one portion of the human body on which to apply the at least one haptic effect by using a time difference of arrival of the sound of said audio event from an audio source point to points on a human body model representing the human body, wherein an output of the localizer is stimulating said at least one portion of the human body according to said at least one haptic effect.

5. The system of claim 4, wherein said localizer provides at least one haptic effect locale and at least one haptic effect intensity.

6. The system of claim 4 wherein said localizer comprises a user interface for localizing haptics, the user interface comprising:
- a three-dimensional body model to show where the at least one haptic effect is located on at least one portion of the human body for the at least one haptic event derived from the audio event occurring in the multimedia content information; and
- a haptic effect duration indicator that shows a duration of the at least one haptic effect.

7. The system of claim 6 wherein the user interface further comprises:
- a selector that allows selection of different haptic effects for a given portion of the three-dimensional human body model.

8. The system of claim 6 or 7 wherein the user interface comprises:
- a selector that allows selection of different haptic events from the multimedia content and its associated haptic effect on the three-dimensional human body model.

9. The system of claim 6 or 7, wherein the haptic effect duration indicator allows a start and stop time associated with the at least one haptic effect to be altered.

## Patentansprüche

1. Verfahren zum Bestimmen einer haptischen Lokalisierung an einem menschlichen Körper, wobei das Verfahren umfasst:
- Empfangen mindestens einer haptischen Wirkung, die mindestens einem haptischen Ereignis, das in Multimediainhalt auftritt, zugeordnet werden soll, wobei das haptische Ereignis von einem Audioereignis von dem Multimediainhalt abgeleitet wird;
- Bestimmen mindestens eines Teils des menschlichen Körpers, auf den die mindestens eine haptische Wirkung angewendet werden soll, unter Verwendung einer Zeitdifferenz der Ankunft des Schalls des Audioereignisses von einem Audioquellenpunkt zu Punkten an einem Modell des menschlichen Körpers, das den menschlichen Körper repräsentiert; und
- Stimulieren des mindestens einen Teils des menschlichen Körpers gemäß der mindestens einen haptischen Wirkung.

2. Verfahren nach Anspruch 1, das ferner umfasst:
- Verwenden mindestens eines Kanals eines Audioanteils des Multimediainhalts, um einen Ort, wo die haptische Wirkung auf den menschlichen Körper angewendet werden soll, identifizieren zu helfen.

3. Verfahren nach Anspruch 1, wobei der Grad der Stärke zum Anwenden der haptischen Wirkung unter Verwendung einer Zeitdifferenz der Ankunft des Schalls des Audioereignisses von dem Audioquellenpunkt zu Punkten an dem Modell des menschlichen Körpers bestimmt wird.

4. System zum Bestimmen der haptischen Lokalisierung an einem menschlichen Körper, wobei das System umfasst:
- einen Generator haptischer Wirkungen, der Multimediainhalt analysiert, um mindestens ein haptisches Ereignis zu bestimmen, und der auf der Grundlage des haptischen Ereignisses mindestens eine haptische Wirkung erzeugt, wobei das haptische Ereignis von dem Audioereignis von dem Multimediainhalt abgeleitet wird; und
- eine Lokalisierungseinrichtung, die unter Verwendung einer Zeitdifferenz der Ankunft des Schalls des Audioereignisses von dem Audioquellenpunkt zu Punkten an einem Modell des menschlichen Körpers, das den menschlichen Körper repräsentiert, mindestens einen Teil des menschlichen Körpers bestimmt, auf den die mindestens eine haptische Wirkung angewendet werden soll, wobei eine Ausgabe der Lokalisierungseinrichtung den mindestens einen Teil des menschlichen Körpers gemäß der mindestens einen haptischen Wirkung stimuliert.

5. System nach Anspruch 4, wobei die Lokalisierungseinrichtung mindestens eine Region der haptischen Wirkung und mindestens eine Stärke der haptischen Wirkung bereitstellt.

6. System nach Anspruch 4, wobei die Lokalisierungseinrichtung eine Benutzerschnittstelle zum Lokalisieren von Haptik umfasst, wobei die Benutzerschnittstelle umfasst:
- ein dreidimensionales Körpermodell, um zu zeigen, wo sich die mindestens eine haptische Wirkung an mindestens einem Teil des menschlichen Körpers für das mindestens eine von dem Audioereignis, das in den Multimediainhaltsinformationen auftritt, abgeleitete haptische Ereignis befindet; und
- einen Indikator der Dauer einer haptischen Wirkung, der eine Dauer der mindestens einen haptischen Wirkung zeigt.

7. System nach Anspruch 6, wobei die Benutzerschnittstelle ferner umfasst:
- eine Auswahleinrichtung, die die Auswahl unterschiedlicher haptischer Wirkungen für einen gegebenen Teil des dreidimensionalen Modells des menschlichen Körpers ermöglicht.

8. System nach Anspruch 6 oder 7, wobei die Benutzerschnittstelle umfasst:
- eine Auswahleinrichtung, die die Auswahl unterschiedlicher haptischer Ereignisse aus dem Multimediainhalt und ihrer zugeordneten haptischen Wirkung an dem dreidimensionalen Modell des menschlichen Körpers ermöglicht.

9. System nach Anspruch 6 oder 7, wobei der Indikator der Dauer einer haptischen Wirkung ermöglicht, dass eine Start- und Stoppzeit, die der mindestens einen haptischen Wirkung zugeordnet sind, geändert werden.

## Revendications

1. Procédé de détermination de localisation haptique sur un corps humain, comprenant :
- la réception d'au moins un effet haptique à associer à au moins un événement haptique qui se produit dans un contenu multimédia, l'événement haptique étant dérivé d'un événement audio du contenu multimédia ;
- la détermination d'au moins une partie du corps humain sur laquelle appliquer l'au moins un effet haptique à l'aide d'une différence de temps d'arrivée du son dudit événement audio d'un point de source audio à des points sur un modèle de corps humain représentant le corps humain ;
- la stimulation de ladite au moins une partie du corps humain selon ledit au moins un effet haptique.

2. Procédé selon la revendication 1, comprenant en outre :
- l'utilisation d'au moins un canal d'une partie audio du contenu multimédia pour faciliter l'identification d'une localisation où appliquer l'effet haptique sur le corps humain.

3. Procédé selon la revendication 1, dans lequel un degré d'intensité avec lequel appliquer l'effet haptique est déterminé à l'aide d'une différence de temps d'arrivée du son dudit événement audio dudit point de source audio à des points sur le modèle de corps humain.

4. Système de détermination de localisation haptique sur un corps humain, comprenant :
- un générateur d'effet haptique qui analyse le contenu multimédia pour déterminer au moins un événement haptique et génère au moins un effet haptique basé sur l'événement haptique, dans lequel l'événement haptique est dérivé d'un événement audio du contenu multimédia ; et
- un dispositif de localisation qui détermine au moins une partie du corps humain sur laquelle appliquer l'au moins un effet haptique à l'aide d'une différence de temps d'arrivée du son dudit événement audio d'un point de source audio à des points sur un modèle de corps humain représentant le corps humain ; dans lequel
- une sortie du dispositif de localisation stimule ladite au moins une partie du corps humain selon ledit au moins un effet haptique.

5. Système selon la revendication 4, dans lequel ledit dispositif de localisation fournit au moins une locale d'effet haptique et au moins une intensité d'effet haptique.

6. Système selon la revendication 4, dans lequel ledit dispositif de localisation comprend une interface utilisateur pour la localisation d'effets haptiques, l'interface utilisateur comprenant :
- un modèle de corps en trois dimensions pour indiquer la localisation de l'au moins un effet haptique sur au moins une partie du corps humain pour l'au moins un événement haptique dérivé de l'événement audio qui se produit dans les informations du contenu multimédia ; et
- un indicateur de durée d'effet haptique indiquant la durée de l'au moins un effet haptique.

7. Système selon la revendication 6, dans lequel l'interface utilisateur comprend en outre :
- un sélecteur permettant de sélectionner différents effets haptiques pour une partie donnée du modèle de corps humain en trois dimensions.

8. Système selon la revendication 6 ou 7, dans lequel l'interface utilisateur comprend :
- un sélecteur permettant de sélectionner différents événements haptiques du contenu multimédia et leurs effets haptiques associés sur le modèle de corps humain en trois dimensions.

9. Système selon la revendication 6 ou 7, dans lequel l'indicateur de durée d'effet haptique permet d'inclure une heure de début et une heure de fin associées à l'au moins un effet haptique à modifier.
